(19) **Europäisches Patentamt / European Patent Office / Office européen des brevets**

(11) **EP 2 605 249 B1**

(12) **FASCICULE DE BREVET EUROPEEN**

(45) Date de publication et mention de la délivrance du brevet:
**20.08.2014 Bulletin 2014/34**

(51) Int Cl.:
*B01J 8/00* *(2006.01)*    *G21F 9/22* *(2006.01)*
*G21F 9/02* *(2006.01)*    *G21F 9/06* *(2006.01)*
*G21F 9/04* *(2006.01)*    *G21F 9/12* *(2006.01)*
*G21F 9/30* *(2006.01)*

(21) Numéro de dépôt: **12196595.8**

(22) Date de dépôt: **11.12.2012**

(54) **Procédé et dispositif de réduction du dégazage de déchets tritiés issus de l'industrie nucléaire**

Verfahren und Vorrichtung zur Reduzierung des Ausgasens von tritiumhaltigem Abfall aus der Nuklearindustrie

Process and apparatus for the reduction of degassing of tritiated waste made by nuclear industry

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2011 FR 1161500**

(43) Date de publication de la demande:
**19.06.2013 Bulletin 2013/25**

(73) Titulaire: **COMMISSARIAT A L'ENERGIE ATOMIQUE ET AUX ENERGIES ALTERNATIVES**
**75015 Paris (FR)**

(72) Inventeurs:
- **Lefebvre, Xavier**
  **84120 Pertuis (FR)**
- **Liger, Karine**
  **84120 Pertuis (FR)**
- **Troulay, Michèle**
  **13100 Aix en Provence (FR)**

(74) Mandataire: **Hautier, Nicolas**
**Cabinet Hautier**
**20, rue de la Liberté**
**06000 Nice (FR)**

(56) Documents cités:
**EP-A1- 0 240 985**    **EP-A1- 1 752 206**
**DE-A1- 3 606 317**    **US-A- 5 464 988**

EP 2 605 249 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE DE L'INVENTION

La présente invention concerne un procédé et un dispositif de traitement des déchets issus de l'industrie nucléaire. Elle porte plus particulièrement sur un procédé et un dispositif permettant de limiter le dégazage de déchets tritiés produits par des réactions nucléaires.

ÉTAT DE LA TECHNIQUE

Le tritium (T ou $^3$H) peut être présent dans plusieurs types de réacteurs nucléaires. Dans la plupart des réacteurs de fission, il peut par exemple être produit par la fission ternaire de l'uranium (U) et du plutonium (Pu) ainsi que dans des réactions neutroniques entre du bore (B) et du lithium (Li). En outre, dans les réacteurs de fusion, le tritium est utilisé comme combustible. Tel est le cas des réacteurs JET (acronyme de Joint European Torus ce qui signifie tore commun européen), ITER (acronyme de International Thermonuclear Experimental Reactor ce qui signifie réacteur expérimental thermonucléaire international) et DEMO (acronyme de Demonstration Power Plant signifiant centrale nucléaire de démonstration) prévu pour succéder au réacteur ITER. Dans ces réacteurs, la réaction de fusion à partir de deutérium (D ou $^2$H) et de tritium (T ou $^3$H) est régie par l'équation suivante :

$$D + T \rightarrow {}^4_2\text{He} + {}^1_0\text{n} + 17.6\text{MeV}$$

L'une des propriétés du tritium, tout comme les autres isotopes de l'hydrogène, est sa capacité à pénétrer à travers les matériaux, ce qui les contamine. Cette propriété rend les déchets tritiés bien spécifiques puisque tant les éléments radioactifs que les dégazages doivent être pris en compte pour la gestion des déchets. Par ailleurs, le tritium peut être présent sous deux formes gazeuses, l'hydrogène tritié (HT ou $T_2$) et l'eau tritiée (HTO ou $T_2$O). Il est à noter que l'hydrogène tritié (HT ou $T_2$) est beaucoup plus mobile que l'eau tritiée (HTO ou $T_2$O), même sous forme de vapeur. L'hydrogène tritié (HT ou $T_2$) présente en outre une très petite taille. Sa grande mobilité et sa petite taille favorisent sa diffusion même à travers les porosités les plus fines, passant par exemple à travers le caoutchouc et diffusant dans la plupart des types d'acier et de béton. Le piégeage de l'hydrogène tritié (HT ou $T_2$) est donc rendu particulièrement complexe.

Avec le développement des réacteurs de fusion, la quantité de déchets tritiés va ainsi augmenter de manière significative. Il existe par conséquent un besoin particulièrement important consistant à dimensionner un procédé efficace de détritiation et de limitation du dégazage, notamment à température ambiante et à pression atmosphérique. La réduction de la quantité d'hydrogène tritié produit par un colis de déchets doit être suffisamment efficace pour satisfaire les critères existants d'acceptabilité des centres d'entreposage et de stockage, afin que ces colis comportant des déchets tritiés puissent intégrer les centres d'entreposage et de stockage existants.

Une solution a été proposée et est décrite dans le brevet US 5,464,988. Ce brevet propose un dispositif pour stocker et transporter de l'eau tritiée contenu dans un gaz. Le dispositif comprend un fût externe et un fût interne disposé à l'intérieur du fût externe. A l'intérieur du fût interne se trouve un tamis moléculaire jetable destiné à se charger en tritium. Le dispositif comprend également des diffuseurs d'entrée et de sortie ainsi qu'un recombineur catalytique d'hydrogène. Un matériau de protection et d'isolation thermique est disposé à chaque espace disponible entre les deux fûts. Le recombineur catalytique d'hydrogène convertit l'hydrogène tritié en eau tritiée qui peut ensuite être piégé par le tamis moléculaire sous forme solide en vue de son stockage et de son transport.

Ce dispositif apporte une solution pour piéger de l'eau tritiée sous forme gazeuse. Piéger de l'hydrogène tritié (HT ou $T_2$) s'avère cependant plus compliqué du fait de la taille plus faible et de la plus forte mobilité de ce gaz par rapport à de l'eau tritiée sous forme gazeuse. En outre, cette solution repose sur un fût particulièrement complexe et nécessitant de nombreux équipements spécifiques qui requièrent une maintenance spécifique. Par exemple, l'utilisation d'un recombineur catalytique nécessite un dispositif de chauffage et donc une maintenance du système. De plus, une intervention humaine est nécessaire pour changer régulièrement le tamis moléculaire saturé en eau tritiée.

La complexité de cette solution tend à rendre son coût relativement élevé et sa fiabilité limitée.

Il existe donc un besoin consistant à proposer une solution simple et efficace de limitation du dégazage de l'hydrogène tritié ($T_2$ ou HT) et eau tritiée (HTO ou $T_2$O), cette solution devant également permettre de réduire les besoins de maintenance et d'intervention humaine. La solution doit en outre être efficace sur plusieurs centaines d'années.

La présente invention a pour objectif de décrire une telle solution.

RÉSUMÉ DE L'INVENTION

Dans la suite de l'exposé de l'invention on parlera indifféremment d'eau tritiée, ce qui désigne les éléments HTO et $T_2O$. Dans la présente description, l'eau tritiée désigne de l'eau tritiée sous forme de vapeur ou de liquide.

La présente invention a pour objet un procédé de réduction de la quantité d'hydrogène tritié ($T_2$ ou HT) et/ou d'eau tritiée (HTO ou $T_2O$) généré par au moins un colis comprenant au moins un déchet. Le procédé comprend les étapes suivantes : une étape de mise en présence du colis avec un mélange comprenant du dioxyde de manganèse ($MnO_2$) combiné à un composé à base d'argent, puis une étape de mise en présence du colis avec un tamis moléculaire.

Le mélange permet d'oxyder efficacement l'hydrogène tritié ($T_2$ ou HT) pour réduire la diffusivité de ce gaz. Il en résulte de l'eau tritiée ($T_2O$ ou HTO), l'eau tritiée étant bien moins mobile que de l'hydrogène tritié. L'eau tritiée est alors piégée par le tamis moléculaire. Il s'est avéré que la combinaison du tamis moléculaire avec le mélange comprenant du dioxyde de manganèse associé à de l'argent permet de réduire le dégazage de déchets tritiés de manière très efficace et sûre même pour de faibles quantités d'hydrogène tritié. En particulier, la combinaison du procédé selon l'invention permet une cinétique élevée et une grande réactivité par rapport à l'hydrogène tritié. En outre, ce procédé de piégeage de l'hydrogène tritié ne nécessite pas de maintenance externe. De manière particulièrement avantageuse, il peut être effectué à pression et à température ambiantes. Par ailleurs, la réaction génère un produit thermiquement stable. Elle est en outre difficilement ou non réversible sur au moins plusieurs centaines d'années. De manière avantageuse, le procédé de piégeage proposé par l'invention est relativement simple à mettre en oeuvre et peu onéreux. La présente invention est donc particulièrement pertinente pour une utilisation à une échelle industrielle.

Dans le cadre de la présente invention, on désigne par déchet tritié tout déchet radioactif susceptible de contenir ou de dégazer de l'hydrogène tritié (HT ou $T_2$). Le déchet peut en outre contenir du tritium sous d'autres formes comme par exemple de l'eau tritiée (HTO ou $T_2O$). Typiquement, le déchet est issu de l'industrie nucléaire et est susceptible de contenir ou de dégazer de l'hydrogène tritié ou/et de l'eau tritiée.

Dans le cadre de la présente invention, la mise en présence d'au moins deux éléments, typiquement de l'hydrogène tritié ou de l'eau tritiée avec le mélange comprenant du dioxyde de manganèse ($MnO_2$) combiné à un composé à base d'argent et/ou avec le tamis moléculaire signifie que ces éléments sont disposés de sorte à pouvoir réagir entre eux. Cette mise en présence peut donc être un contact physique de deux éléments à l'état de solide, de liquide ou de gaz. En tout état de cause, une mise en présence permet aux éléments d'interagir pour que la réaction de transformation de l'hydrogène tritié en eau tritiée et pour que la réaction de piégeage de l'eau tritiée par le tamis moléculaire s'effectuent.

De manière facultative, le procédé selon l'invention peut présenter au moins l'une quelconque des étapes et caractéristiques optionnelles énoncées ci-dessous.

Le colis peut comporter au moins un déchet généré par une réaction de fission nucléaire. De manière alternative ou cumulée, le colis peut comporter au moins un déchet formé par un combustible utilisé ou à utiliser pour une réaction de fusion nucléaire. Le colis peut également comporter un déchet rendu tritié par la présence d'un autre déchet tritié ou par la présence d'un combustible tritié. Le déchet peut ainsi être le produit ou le combustible d'une réaction nucléaire. Il peut également être tout élément contaminé par le produit ou le combustible d'une réaction nucléaire. Le déchet peut ainsi être un objet rendu radioactif tel qu'un vêtement ou un outil, des parties de réacteur, du combustible radioactif, etc.

Le composant à base d'argent comprend au moins l'un des composants suivants : AgO, $Ag_2O$, sels d'argent, type AgCl ou $AgNO_3$, ou complexes à base d'argent.

Préférentiellement, l'argent est sous forme d'oxyde d'argent (AgO ou $Ag_2O$) dans le mélange. La concentration massique du dioxyde de manganèse dans le mélange est comprise entre 80% et 99% et la concentration massique d'oxyde d'argent $Ag_2O$ dans le mélange est comprise entre 20% et 1%. Ceci correspond à une fraction massique d'argent (Ag) comprise entre 0.93% et 18.6%. En effet, 10% d'$Ag_2O$ correspond à 9.3% d'argent (Ag).

Plus précisément, la concentration massique du dioxyde de manganèse dans le mélange est comprise entre 87% et 93% et la concentration massique de l'oxyde d'argent $Ag_2O$ dans le mélange est comprise entre 13% et 7%. De manière encore plus préférentielle, les concentrations massiques dans le mélange pour le dioxyde de manganèse et pour l'oxyde d'argent $Ag_2O$ sont respectivement de l'ordre de 90% et 10%.

De préférence, l'argent est sous forme de nitrate d'argent ($AgNO_3$) la fraction massique d'argent (Ag) dans le mélange est comprise entre 1.5 à 30% et de préférence de l'ordre de 15%.

Selon un mode de réalisation particulier, le mélange comprend du platine (Pt) ou un composé contenant du platine. Par souci de clarté, dans la suite de la présente description, on nommera ce composé contenant du platine « composé platine ».

Avantageusement, il s'agit de noir de platine 10%Pt souvent désigné par le vocable anglais « platinum black 10%Pt ». De manière connue, le noir de platine 10%Pt est composé de 90% de charbon actif et de 10% de platine.

Le platine permet d'accélérer et de faciliter l'oxydation de l'hydrogène tritié.

Avantageusement, la concentration massique du composé platine dans le mélange est comprise entre 0.1% et 1%, c'est-à-dire une proportion de platine comprise entre 0.01 et 0.1 % pour le noir de platine 10%Pt. De préférence, cette concentration est de 0.5% de Pt black 10%, soit 0.05% de platine, celle du dioxyde de manganèse est de 89.3% et celle de l'oxyde d'argent $Ag_2O$ est de 10.2%. Plus précisément, ces concentrations sont respectivement de 0.56%, 89.28% et 10.16%.

Selon un mode de réalisation particulier, le mélange comprend uniquement du dioxyde de manganèse et de l'oxyde d'argent. Selon un autre mode de réalisation, le mélange comprend uniquement du dioxyde de manganèse, de l'oxyde d'argent et du composé platine.

Préférentiellement, le tamis moléculaire est une zéolite de type 4A ou 5A.

De préférence, le procédé comprend, préalablement aux étapes de mise en présence du colis avec le mélange et de mise en présence du colis avec au moins un tamis moléculaire, une étape de dépôt du mélange sur le tamis moléculaire. Selon un mode de réalisation avantageux, l'étape de dépôt du mélange sur le tamis moléculaire s'accompagne d'une étape de fixation mécanique du mélange sur le tamis moléculaire. Selon un autre mode de réalisation avantageux, l'étape de dépôt du mélange sur le tamis moléculaire s'accompagne d'une étape de fixation chimique du mélange sur le tamis moléculaire à l'aide d'un liant, comme par exemple l'eau. Dans ce cas, l'étape de fixation consiste en la mise en contact en phase aqueuse du mélange et du tamis moléculaire suivie d'une étape de séchage à une température comprise entre 150 et 200°C pendant une durée comprise entre 12h et 48h..

Selon un mode de réalisation dans lequel le mélange est fixé au tamis moléculaire, le colis se présente sous forme d'un fût présentant un fond et apte à contenir au moins un déchet tritié, le procédé comprenant une étape de placement, dans le fond du fût, du tamis sur lequel est fixé le mélange.

Selon un mode de réalisation dans lequel le mélange n'est pas fixé au tamis moléculaire, le colis se présente sous forme d'un fût présentant un fond et renfermant au moins un déchet tritié, le procédé comprenant une étape de placement du tamis dans le fond du fût et une étape de disposition du mélange au sein des déchets ou sur les déchets.

Le tamis et le mélange peuvent également être placés dans un fût déjà rempli en totalité ou partiellement.

Selon encore un autre mode de réalisation le mélange est disposé sur un treillis métallique pour former une couverture, le procédé comprenant en outre une étape d'enveloppement d'une partie au moins du colis par la couverture. De préférence, le treillis métallique est flexible pour permettre à la couverture d'épouser les formes du colis. De préférence, la couverture incorpore le tamis moléculaire, ce dernier étant recouvert par le mélange. Ce mode de réalisation est particulièrement avantageux lorsque le colis se présente sous la forme de déchets enrobés dans une matrice, telle qu'une matrice de ciment, de verre ou de bitume.

Le procédé comprend, préalablement à l'étape de mise en présence du colis avec un mélange de dioxyde de manganèse ($MnO_2$) combiné à de l'argent (Ag), une étape de préparation du mélange au cours de laquelle le dioxyde de manganèse ($MnO_2$) est combiné à un composé à base d'argent comme par exemple un oxyde d'argent, un sel d'argent, ces exemples n'étant pas limitatifs.

Préférentiellement, au cours de l'étape de préparation du mélange, l'argent est apporté sous forme d'oxyde d'argent (AgO ou $Ag_2O$) au dioxyde de manganèse ($MnO_2$).

Selon un premier mode de réalisation, l'étape de préparation du mélange comprend une étape de mélange d'une poudre de dioxyde de manganèse avec une poudre d'oxyde d'argent (AgO ou $Ag_2O$). De manière facultative, le procédé comprend, au cours de l'étape de préparation du mélange et après l'étape de mélange de la poudre de dioxyde de manganèse avec la poudre d'oxyde d'argent, une étape d'addition d'eau auxdites poudres mélangées. L'addition d'eau a pour avantage de faciliter la dispersion de l'argent à la surface du dioxyde de manganèse.

Selon un deuxième mode de réalisation, l'étape de préparation du mélange comprend une étape de dispersion d'une solution saline comprenant des ions argent ($Ag^+$) sur du dioxyde de manganèse à l'état solide. De préférence, le dioxyde de manganèse est sous forme de poudre pulvérulente.

Selon un troisième mode de réalisation, l'étape de préparation du mélange comprend une étape d'immersion du dioxyde de manganèse à l'état solide, de préférence sous forme de poudre pulvérulente, dans une solution comprenant un sel ou un oxyde d'argent. Plus précisément, l'argent se trouve sous forme de cation Ag+ ou Ag2+. Un avantage de cette méthode est qu'elle est particulièrement efficace pour obtenir une répartition homogène de l'argent sur le dioxyde de manganèse.

Selon un quatrième mode de réalisation, l'étape de préparation du mélange comprend une étape de dépôt d'argent sur le dioxyde de manganèse par précipitation d'une solution comprenant de l'argent. L'avantage d'un mode d'imprégnation par un liquide est l'homogénéité du mélange final obtenu. La solution comprenant de l'argent est une solution de sels d'argent (AgCl, AgBr, $AgNO_3$, etc.). La précipitation est provoquée par l'introduction d'hydroxyde de sodium (NaOH) dans cette solution de nitrate d'argent.

Selon un mode de réalisation, le colis comporte un fût comprenant une pluralité de déchets tritiés. De manière alternative le colis comprend un déchet enrobé dans une matrice, la matrice étant par exemple en béton, en bitume ou en verre.

La présente invention a également pour objet un dispositif de réduction de la quantité d'hydrogène tritié, le dispositif comprenant au moins un tamis moléculaire, **caractérisé en ce que** le dispositif comporte également un mélange comprenant du dioxyde de manganèse ($MnO_2$) combiné à un composé à base d'argent comme par exemple un oxyde d'argent, un sel d'argent, ces exemples n'étant pas limitatifs.

Pour les raisons mentionnées précédemment en rapport avec le procédé, l'invention propose ainsi un dispositif particulièrement efficace pour réduire le dégazage des déchets tritiés en vue de leur entreposage et de leur stockage.

Selon un mode de réalisation avantageux, le mélange comprenant du dioxyde de manganèse ($MnO_2$) combiné à un composé à base d'argent est fixé sur le tamis moléculaire. De manière optionnelle, la couche présente une épaisseur comprise entre 5 et 20 $\mu$m. Un avantage de ce mode de réalisation est de permettre une dispersion homogène des différents constituants, ce qui améliore l'efficacité du dispositif. De préférence, le tamis moléculaire est une zéolite de type 4A ou 5A. Avantageusement, la couche est fixée au tamis de manière mécanique et/ou à l'aide d'un additif. Cet additif est de préférence un liant, comme par exemple l'eau.

Selon un autre mode de réalisation avantageux, le dispositif comprend au moins un fût apte à contenir au moins un déchet tritié ainsi que le tamis et le mélange.

De manière facultative, le dispositif peut comporter au moins l'une quelconque des caractéristiques suivantes :

- le fût comporte des déchets et le mélange est répandu sur les déchets ou au milieu des déchets.
- le tamis est disposé dans le fond du fût.
- le mélange recouvre au moins en partie le tamis moléculaire, le tamis et le mélange formant un ensemble monobloc.

Selon encore un autre mode de réalisation avantageux, le dispositif comprend une couverture formée par un support souple, de préférence un treillis métallique, le support souple étant recouvert, au moins en partie, par une couche formée par le mélange comprenant du dioxyde de manganèse ($MnO_2$) combiné à un composé à base d'argent, le composé étant un oxyde, sel, un complexe ou autre.

Ainsi, le colis peut par exemple être un fût ou une matrice enfermant un ou plusieurs déchets radioactifs. Il peut également prendre toute autre forme de conteneur.

De manière avantageuse, pour chacun des trois modes de réalisation de dispositif mentionnés ci-dessus, la concentration massique du dioxyde de manganèse dans le mélange est comprise entre 80% et 99%, la concentration massique d'oxyde d'argent $Ag_2O$ dans le mélange est comprise entre 20% et 1%. Ceci correspond à une fraction massique d'argent (Ag) comprise entre 0.93% et 18.6%. En effet, 10% d'$Ag_2O$ correspond à 9.3% d'argent (Ag). De manière optionnelle mais néanmoins avantageuse, le mélange comprend en outre un composé platine dont la concentration massique est de préférence comprise entre 0.1 et 1%. Cela correspond à une concentration massique de platine comprise entre 0.01 et 0.1% pour du noir de platine 10%Pt.

## BRÈVE DESCRIPTION DES FIGURES

D'autres caractéristiques, buts et avantages de la présente invention apparaîtront à la lecture de la description détaillée qui va suivre et en regard des dessins annexés, donnés à titre d'exemples non limitatifs et sur lesquels :

La figure 1 représente des courbes de pression partielle d'eau tritiée et d'hydrogène tritié en fonction du temps et au cours d'un premier exemple de procédé selon l'invention.

La figure 2 représente des courbes de pression partielle d'eau tritiée et d'hydrogène tritié en fonction du temps et au cours d'un deuxième exemple de procédé selon l'invention dans lequel le mélange d'oxyde de manganèse et d'argent comprend du platine.

La figure 3 illustre un exemple de dispositif selon l'invention dans lequel un fût comprend un tamis moléculaire, des déchets tritiés et un mélange comprenant des oxydes de manganèse et d'argent répandus sur les déchets.

La figure 4 illustre un autre exemple de dispositif selon l'invention dans lequel un fût comprend un tamis moléculaire recouvert d'une couche comprenant un mélange d'oxyde de manganèse et d'argent.

## DESCRIPTION DETAILLEE DE L'INVENTION

Un exemple de procédé de réalisation selon l'invention va être détaillé. Des dispositifs permettant de mettre en oeuvre le procédé seront ensuite décrits.

Dans la présente demande de brevet, on désigne par hydrogène tritié, le gaz $T_2$ ou HT. Ainsi, l'hydrogène tritié diffère de l'eau tritiée HTO ou $T_2O$ qui admet un état liquide et un état gazeux. Dans ce dernier état, l'eau sera qualifiée d'eau tritiée à l'état gazeux au cours de la présente description.

Dans le cadre de la présente invention, l'hydrogène tritié (HT ou $T_2$) est oxydé par un oxyde métallique spécifique : le dioxyde de manganèse ($MnO_2$).

La réduction de l'hydrogène et de ses isotopes par du dioxyde de manganèse a pour équation :

$$MnO_2 + Q_2 \rightarrow MnO + Q_2O$$

Où Q représente indifféremment tous les isotopes de l'hydrogène.

Pour obtenir une réduction efficace de la quantité d'hydrogène tritié, il est particulièrement avantageux d'avoir une cinétique élevée pour cette réaction. A cet effet, le dioxyde de manganèse est associé à un composé à base d'argent. Dans le cadre de la présente invention, un composé à base d'argent est un promoteur de la réaction de conversion. Il peut par exemple s'agir d'un oxyde ou d'un sel sans que cela soit limitatif. De manière surprenante, la combinaison des atomes d'argent et de manganèse procure un effet de synergie pour catalyser la réduction de l'hydrogène tritié par le dioxyde de manganèse.

En outre, l'utilisation d'oxyde de manganèse rend la réaction particulièrement sure et peu onéreuse ce qui permet une application industrielle sans apport d'énergie extérieure et sans maintenance.

De manière caractéristique à l'invention, le mélange d'oxyde de manganèse et d'argent est combiné à un déshumidificateur, se présentant typiquement sous la forme d'un tamis moléculaire. Avantageusement, le tamis moléculaire est une zéolite de type 4A ou 5A. De préférence, le colis est en présence d'un unique tamis moléculaire. Le tamis moléculaire permet de piéger l'eau tritiée. Ainsi l'hydrogène tritié voit sa mobilité réduite lors du passage à l'état liquide ou gazeux en eau tritiée grâce à la réaction avec le mélange d'oxyde et voit sa mobilité encore réduite sous l'effet du tamis moléculaire.

L'invention permet donc de transformer l'hydrogène tritié en eau tritiée, eau tritiée qui est par la suite est piégée par le tamis moléculaire.

Par ailleurs, l'invention présente un rendement élevé même pour des quantités faibles d'hydrogène tritié. Or, dans le cadre de dégazage de déchets tritiés, le débit de dégazage d'hydrogène tritié est souvent très faible, typiquement inférieur à 2GBq/an/kg de déchet ou encore $5.6 \times 10^{-7}$ g de Tritium/an/kg de déchet ou encore $1.9 \times 10^{-7}$ mol de tritium/an/kg de déchets.

Le procédé selon l'invention s'est avéré particulièrement efficace pour traiter les déchets tritiés. En effet, le procédé selon l'invention présente une cinétique de réaction élevée et une grande réactivité vis-à-vis de l'hydrogène tritié. En outre, les réactions du procédé ne nécessitent pas une maintenance externe et sont peu ou non réversibles, tout particulièrement pour des températures inférieures à 100°C. Par ailleurs, les réactifs comme les produits générés par le procédé sont thermiquement stables.

Plusieurs manières de préparer le mélange d'oxydes de manganèse et d'argent peuvent être envisagées.

Une première méthode consiste à mélanger de manière mécanique les oxydes de manganèse et d'argent. Plus précisément, le dioxyde de manganèse et l'oxyde d'argent sont tout d'abord produits séparément, chacun sous forme d'une poudre. Les deux poudres sont ensuite mélangées. Cette méthode a pour avantage d'être particulièrement simple à mettre en oeuvre.

Selon une variante de cette première méthode, on peut ajouter de l'eau aux poudres de dioxyde de manganèse et d'oxyde d'argent. L'eau est préférentiellement ajoutée en petite quantité. Cette addition d'eau a pour avantage de faciliter la dispersion de l'argent à la surface de l'oxyde de manganèse. Avantageusement, on ajoute 1 mL ($10^{-3}$ L) d'eau pour 2.5g de mélange d'oxydes. Avec cette proportion d'eau, on assure une très bonne homogénéité du dépôt d'oxyde d'argent, tout en limitant le temps nécessaire à l'évaporation.

Une deuxième méthode consiste à réaliser une imprégnation à sec. Selon cette méthode, on humidifie un substrat de dioxyde de manganèse, de préférence sous forme de poudre ou de pastille, avec une solution saline incluant des ions argent ($Ag^+$) Cette solution saline peut comporter tout halogénure d'argent, par exemple CI, Br, ou du nitrate d'argent. Cette méthode est particulièrement simple à mettre en oeuvre.

Une troisième méthode consiste en une imprégnation diffusionnelle. Selon cette méthode, on place le support de dioxyde de manganèse dans une solution comprenant un sel contenant des ions argent ($Ag^+$) en excès.

Cette méthode est particulièrement efficace pour obtenir une répartition homogène de l'argent.

Une quatrième méthode repose sur le dépôt de l'argent par précipitation. Plus précisément, l'argent est déposé par précipitation sur le manganèse en utilisant une solution comprenant une suspension d'oxydes de manganèse et du nitrate d'argent. La précipitation de l'argent est obtenue par introduction d'hydroxyde de sodium (ou soude) (NaOH) dans la solution.

De préférence, le mélange est effectué de sorte que le dioxyde de manganèse et l'oxyde d'argent $Ag_2O$ présentent respectivement des concentrations massiques comprises entre 80 et 90% et entre 20 et 1%, c'est-à-dire une proportion massique d'argent compris entre 0.93 et 18.6%. Selon un mode de réalisation privilégié, la concentration massique du dioxyde de manganèse est de l'ordre de 90% et celle de l'oxyde d'argent est de l'ordre de 10%.

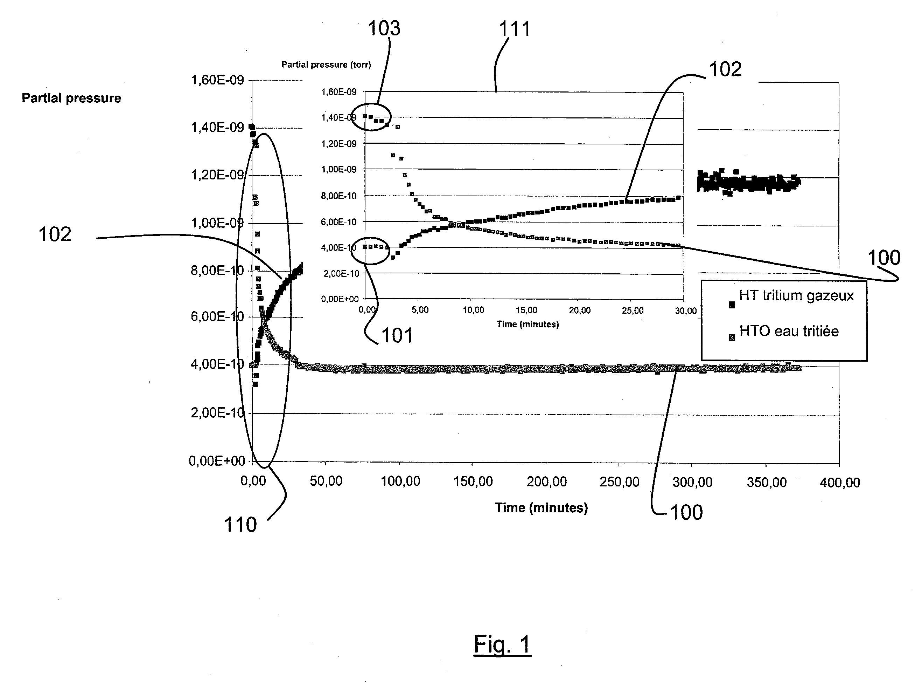

La figure 1 illustre des courbes de pression partielle d'eau tritiée (courbes 100, 101) et d'hydrogène tritié (102, 103) en fonction du temps lors d'un procédé selon l'invention.

Pour la réalisation de ces expérimentations, les concentrations massiques de dioxyde de manganèse et d'oxyde d'argent $Ag_2O$ formant le mélange sont de 90% et de 10% respectivement. La masse utilisée de mélange est de 0,403g. Le tamis moléculaire présente une masse de 11,241 g. Il est formé de zéolite 5A. Le débit de gaz contenant 133 ppmV d'hydrogène tritié, par exemple généré par des déchets tritiés, est d'environ 750 NmL/min (acronyme de Normal milli liters per minute ce qui signifie millilitres normaux par minute).

Ces courbes montrent clairement l'efficacité de l'invention pour réduire la quantité d'hydrogène tritié. L'origine des abscisses du graphe correspond à l'instant où sont mis en présence l'hydrogène tritié et le mélange d'oxydes de manganèse et d'argent couplé au tamis moléculaire.

Le début de la réaction est indiqué par la référence 110 et est présenté sous forme agrandie sur le graphe 111. Durant les deux premières minutes environ, la pression partielle 103 d'hydrogène tritié est relativement stable autour d'une valeur proche de $1,4.10^{-9}$ Torr, ce qui représente 133 Vppm (acronyme de l'expression anglaise « volumetric parts per million » signifiant parties volumique par million) d'hydrogène tritié. Durant cette même période, la pression partielle d'eau tritiée 101 est stable à environ $4.10^{-10}$ Torr ce qui traduit une absence d'eau tritiée.

Dès la mise en présence de l'hydrogène tritié avec le mélange d'oxydes combiné au tamis moléculaire, on observe une diminution rapide de la pression partielle d'hydrogène tritié accompagnée d'une forte augmentation de la pression partielle d'eau tritiée. Cela traduit la production d'eau tritiée par réaction de l'hydrogène tritié avec le mélange d'oxyde de manganèse promu par l'argent.

De manière quasiment instantanée, la pression partielle d'eau tritiée 100 décline rapidement. Au bout de trente minutes, elle atteint à nouveau une pression partielle traduisant une absence d'eau. Simultanément, la pression partielle d'hydrogène tritié 102 augmente pour atteindre $8.10^{-10}$ Torr correspondant à 75 Vppm au bout de trente minutes environ.

L'évolution de ces courbes reflète l'action du tamis moléculaire agissant comme un déshumidificateur qui piège l'eau tritiée produite par la réaction de l'hydrogène tritié avec le mélange d'oxydes. Ces courbes laissent apparaître que le piégeage de l'eau tritiée s'effectue plus rapidement que sa production.

L'augmentation lente de la pression partielle d'hydrogène tritié traduit la saturation progressive du mélange d'oxydes. Lorsque le mélange est saturé, la quantité d'hydrogène tritié augmente progressivement du fait du dégazage produit par les déchets, alors que la quantité d'eau tritiée demeure quant à elle nulle, la réaction d'oxydation étant interrompue faute de réactif.

Le calcul du rendement global du piégeage de l'hydrogène tritié conduit à une réactivité de 23 cm$^3$ d'hydrogène tritié par gramme de mélange d'oxydes.

La courbe de la figure 1 reflète ainsi clairement l'efficacité du procédé selon l'invention même en présence d'une faible quantité d'hydrogène tritié. De manière avantageuse, dans le cadre de la limitation du dégazage des colis de déchets, ce piégeage de l'hydrogène tritié est effectué à pression et à température ambiantes ce qui simplifie sa mise en oeuvre.

Pour vérifier les limites d'efficacité de la présente invention, les essais ont été conduits dans des conditions de dégazage équivalent au dégazage de 9000 colis fortement dégazants, avec de surcroît une masse de mélange très faible. Ceci explique pourquoi les temps de saturation sont faibles.

De manière non limitative mais néanmoins avantageuse, cette efficacité est encore améliorée en ajoutant du platine (Pt) au mélange d'oxydes.

De préférence, un composé platine est ajouté au mélange de dioxyde de manganèse et d'oxyde d'argent dans des proportions faibles. Typiquement, la concentration massique de composé platine est comprise entre 0,1% et 1%.

Cela correspond à une concentration massique de platine comprise entre 0.01 et 0.1 % pour du noir de platine 10%Pt.

Selon un exemple particulièrement efficace, le noir de platine 10% Pt présente une concentration massique de 0,56%, le dioxyde de manganèse présente une concentration massique de 89,28% et l'oxyde d'argent présente une concentration de massique 10,16%.

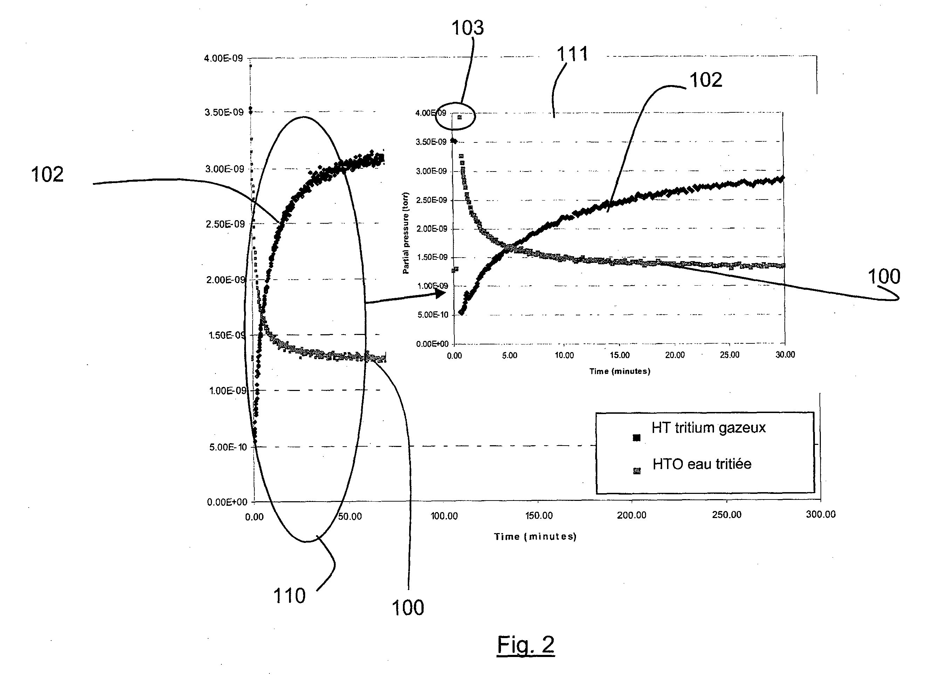

La figure 2 illustre les résultats d'un autre exemple de procédé de réalisation de l'invention dans lequel le mélange comportant le dioxyde de manganèse et l'oxyde d'argent comprend également du platine ou un composé platine. Les autres conditions pour réaliser ces courbes sont identiques à celle illustrées en figure 1.

Pour réaliser ces expérimentations, les concentrations massiques d'oxyde de manganèse, d'oxyde d'argent et de platine dans le mélange sont respectivement de 89,5%, 10% et 0,5%. La masse utilisée de mélange est de 0,119 g. Le tamis moléculaire présente une masse de 9,202 g. Tout comme dans l'exemple précédent, il est formé de zéolite 5A. Le débit de gaz contenant 133 Vppm d'hydrogène tritié est également de 750 NmL/min.

Comme on peut l'observer sur les courbes de la figure 2, la pression partielle 103 de l'hydrogène tritié est relativement stable autour d'une valeur proche de $5 \times 10^{-10}$ Torr ce qui représente 12 Vppm d'hydrogène tritié.

Ensuite, la saturation des réactifs survient rapidement du fait de la faible quantité d'oxydes. La concentration d'hydrogène tritié atteint 85% de sa concentration initiale, soit 115 Vppm au bout de 30 minutes et atteint sa valeur initiale au bout de 90 minutes. L'évolution de la concentration d'eau tritiée est similaire à celle illustrée en figure 1.

Le calcul du rendement global du piégeage de l'hydrogène tritié conduit dans ce deuxième cas à une réactivité de 30 cm$^3$ d'hydrogène tritié par gramme de mélange d'oxydes. Cela représente une augmentation du rendement de 25% en comparaison avec le procédé dans lequel le mélange d'oxydes ne comporte pas de platine. L'introduction de platine dans le mélange présente donc un effet particulièrement avantageux.

Comme détaillé ci-dessus, l'invention repose sur le couplage d'un tamis moléculaire avec un mélange comprenant du dioxyde de manganèse et de l'oxyde d'argent. Ce couplage peut prendre différentes formes.

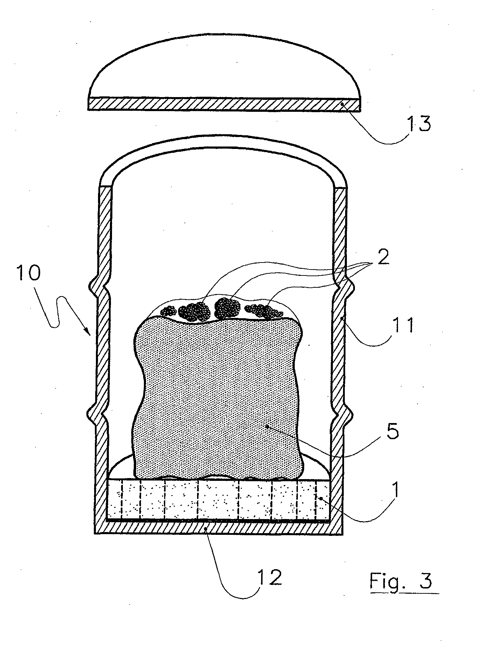

Selon un premier mode de réalisation illustré en figure 3, le déchet tritié 5 est disposé dans un fût 10. Le fût 10 peut se présenter sous diverses formes et notamment sous forme d'un cylindre présentant des parois verticales 11, un fond 12 et un couvercle 13. Le fût 10 définit ainsi un logement apte à contenir des déchets tritiés 5. De préférence, le tamis moléculaire 1 est disposé dans le fond 12 du fût 10. Les déchets 5 peuvent alors être disposés au fond du fût en recouvrant au moins en partie le tamis 1. Le mélange 2 comprenant le dioxyde de manganèse et l'oxyde d'argent est ensuite déposé sur la surface des déchets 5.

La combinaison du fût 10, du tamis moléculaire 1 et du mélange d'oxydes 2 forme ainsi un dispositif autonome permettant d'accueillir des déchets radioactifs et d'assurer de manière efficace et durable le piégeage de l'hydrogène tritié et de l'eau tritiée.

Selon un autre mode de réalisation, le mélange comprenant du dioxyde de manganèse et de l'oxyde d'argent est déposé sur le tamis. De préférence ce dépôt permet de former un ensemble monobloc. Il est alors aisément manipulable. Dans ce cas, on peut prévoir de fixer le mélange 2 sur le tamis 1 de manière mécanique par brassage des espèces mises en présence. De manière alternative ou cumulée, on peut assurer ou renforcer cette fixation par l'intermédiaire d'un additif. On peut par exemple utiliser l'eau comme additif. Par suite, on évapore cette eau en séchant le mélange d'oxydes entre 150 et 200°C pendant 12h et 48h. Le mélange 2 forme ainsi une couche 3 couvrant en partie au moins le tamis 1. Le recouvrement du tamis 1 est effectué de sorte à ne pas altérer les propriétés de déshumidification du tamis 1.

L'ensemble formé par le tamis moléculaire associé avec le mélange de sorte à former un ensemble monobloc est en soi particulièrement avantageux puisqu'il peut être mis en présence de déchets tritiés se présentant sous des formes et des conditionnements variés.

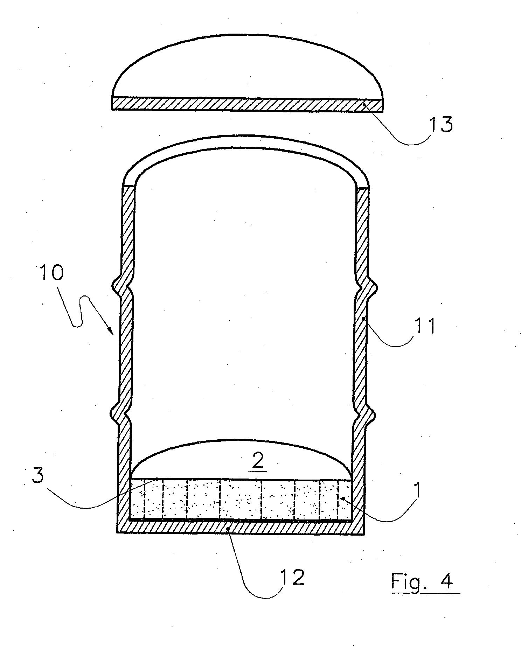

Selon un mode de réalisation particulier illustré en figure 4, l'ensemble formé par le tamis 1 et le mélange 2 est disposé dans un fût 10, par exemple sur le fond 12 du fût 10. Il suffit alors de disposer les déchets à l'intérieur du fût 10 pour que le piégeage de l'hydrogène tritié s'effectue au fur et à mesure du dégazage.

Selon un autre mode de réalisation, le tamis moléculaire est disposé en tout point du fût.

Selon un autre mode de réalisation, les déchets radioactifs sont enrobés dans une matrice. Le colis est ainsi formé de la matrice et des déchets. Cette matrice est par exemple en ciment, en bitume ou en verre. Dans ce cas, il est avantageux de fixer le mélange comprenant les oxydes de manganèse et d'argent sur une structure souple tel un treillis métallique de sorte à former une couverture pour envelopper les déchets. De préférence, la couverture est flexible. De préférence, le tamis moléculaire est intégré à la couverture.

Au vu de la description qui précède, il apparaît clairement que l'invention apporte une réponse efficace au problème de dégazage de l'hydrogène tritié et de l'eau tritiée.

Il est prévu que durant la totalité de sa durée de fonctionnement ainsi que sa durée de démantèlement, un réacteur de type ITER produira environ 35 000 tonnes de déchets radioactifs. Parmi ces déchets, les déchets tritiés purs et les déchets très faiblement radioactifs devraient être disposés directement dans des fûts.

Afin de respecter les contraintes de stockage, le dégazage de l'hydrogène tritié devrait être de l'ordre 0,1 milligramme par an et par fût.

Ainsi, avec ce taux théorique de dégazage et quand bien même le rendement du piégeage de l'hydrogène tritié serait faible (un rendement de 0,3%), un seul gramme de mélange comprenant du dioxyde de manganèse combiné à de l'oxyde d'argent serait nécessaire. Avec un taux de dégazage de 0,1 milligramme par an et par fût, un tamis moléculaire de 120 g de zéolite par an et par $m^3$ de fût devrait également être suffisant pour assurer le piégeage de l'eau tritiée présente à l'état de vapeur et sous forme d'eau tritiée liquide. Cette quantité relativement faible de matériaux représentant le tamis moléculaire devrait en outre s'avérer suffisante même avec des conditions extrêmes de chaleur (au moins jusqu'à 40°C) et d'humidité (au moins 40%).

La présente invention n'est pas limitée aux modes de réalisation précédemment décrits mais s'étend à tout mode de réalisation conforme à son esprit.

**Revendications**

1.  Procédé de réduction de la quantité d'hydrogène tritié ($T_2$ ou HT) et/ou d'eau tritiée (HTO ou $T_2O$) généré par au moins un colis comprenant au moins un déchet tritié (5) issu de l'industrie nucléaire, le procédé étant **caractérisé en ce qu'il** comprend les étapes suivantes :

    - mise en présence du colis avec un mélange (2) comprenant du dioxyde de manganèse ($MnO_2$) combiné à un composé comportant de l'argent ;
    - mise en présence du colis avec au moins un tamis moléculaire (1).

**2.** Procédé selon la revendication 1, dans lequel l'argent est sous forme d'oxyde d'argent dans le mélange (2), dans lequel la concentration massique du dioxyde de manganèse dans le mélange (2) est comprise entre 80% et 99% et dans lequel la concentration massique d'oxyde d'argent dans le mélange (2) est comprise entre 20% et 1 %.

**3.** Procédé selon la revendication précédente, dans lequel les concentrations massiques dans le mélange (2) pour le dioxyde de manganèse et pour l'oxyde d'argent sont respectivement de l'ordre de 90% et 10%.

**4.** Procédé selon l'une quelconque des revendications précédentes, dans lequel le mélange (2) comprend un composé platine dont la concentration massique dans le mélange (2) est comprise entre 0.1 % et 1 %.

**5.** Procédé selon la revendication précédente, dans lequel le composé platine est un composé de noir de platine 10%Pt.

**6.** Procédé selon l'une quelconque des revendications précédentes, dans lesquelles le tamis moléculaire (1) est une zéolite de type 4A ou 5A.

**7.** Procédé selon l'une quelconque des revendications précédentes, comprenant, préalablement aux étapes de mise en présence du colis avec le mélange (2) et de mise en présence du colis avec un tamis moléculaire (1), une étape de dépôt du mélange (2) sur le tamis moléculaire (1).

**8.** Procédé selon la revendication précédente, dans lequel l'étape de dépôt du mélange (2) sur le tamis moléculaire (1) s'accompagne d'une étape de fixation mécanique du mélange (2) sur le tamis moléculaire (1) ou d'une étape de fixation chimique du mélange (2) sur le tamis moléculaire (1) à l'aide d'un additif.

**9.** Procédé selon la revendication précédente, dans lequel le colis se présente sous forme d'un fût (10) présentant un fond (12) et apte à contenir au moins un déchet tritié (5), le procédé comprenant une étape de placement, à l'intérieur du fût (10), du tamis moléculaire (1) sur lequel est fixé le mélange (2) ou dans lequel le colis se présente sous forme d'un fût (10) présentant un fond (12) et renfermant au moins un déchet tritié (5), le procédé comprenant une étape de placement du tamis moléculaire (1) dans le fond (12) du fût (10) et une étape de disposition du mélange (2) au sein des déchets (5) ou sur les déchets (5).

**10.** Procédé selon l'une quelconque des revendications précédentes, dans lequel le mélange (2) est disposé en partie au moins sur un support souple pour former une couverture, le procédé comprenant en outre une étape d'enveloppement d'une partie au moins du colis par la couverture, le support souple étant, de préférence, un treillis métallique.

**11.** Procédé selon l'une quelconque des revendications précédentes comprenant, préalablement à l'étape de mise en présence du colis avec un mélange (2) de dioxyde de manganèse ($MnO_2$) combiné à un composé comportant de l'argent, une étape de préparation du mélange (2) au cours de laquelle le dioxyde de manganèse ($MnO_2$) est combiné au composé comportant de l'argent (Ag).

**12.** Procédé selon la revendication précédente, au cours de l'étape de préparation du mélange (2), l'argent est apporté sous forme d'oxyde d'argent (AgO ou $Ag_2O$) au dioxyde de manganèse ($MnO_2$).

**13.** Procédé selon la revendication précédente, dans lequel l'étape de préparation du mélange (2) comprend une étape de mélange (2) d'une poudre de dioxyde de manganèse avec une poudre d'oxyde d'argent (AgO, $Ag_2O$) et, de préférence, le procédé comportant au cours de l'étape de préparation du mélange et après l'étape de mélange de la poudre de dioxyde de manganèse avec la poudre d'oxyde d'argent, une étape d'addition d'eau auxdites poudres mélangées.

**14.** Procédé selon la revendication 11, dans lequel l'étape de préparation du mélange (2) comprend l'une parmi les étapes suivantes : une étape de dispersion d'une solution saline comprenant des ions argent ($Ag^+$) sur du dioxyde de manganèse à l'état solide ou ; une étape d'immersion du dioxyde de manganèse à l'état solide dans une solution comprenant un sel comportant de l'argent ou ; une étape de dépôt d'argent sur le dioxyde de manganèse par précipitation d'une solution comprenant de l'argent.

**15.** Dispositif de réduction de la quantité d'hydrogène tritié ($T_2$ ou HT) généré par au moins un colis comprenant au moins un déchet tritié (5), le dispositif comprenant au moins un tamis moléculaire (1), **caractérisé en ce que** le dispositif comporte également un mélange (2) comprenant du dioxyde de manganèse ($MnO_2$) combiné à un composé comportant de l'argent.

16. Dispositif selon la revendication précédente, dans lequel ledit mélange (2) est fixé sur le tamis moléculaire (1).

17. Dispositif selon la revendication 15 comprenant au moins un fût (10) apte à contenir au moins un déchet tritié (5) ainsi que le tamis moléculaire (1) et le mélange (2).

18. Dispositif selon la revendication 15, dans lequel le mélange (2) recouvre au moins en partie le tamis moléculaire (1), le tamis moléculaire (1) et le mélange (2) formant un ensemble monobloc.

19. Dispositif selon la revendication 15, comprenant une couverture formée par un support souple, le support souple étant recouvert, au moins en partie, d'une couche formée par le mélange comprenant du dioxyde de manganèse ($MnO_2$) combiné à un composé contenant de l'argent et dans lequel, de préférence, la couverture comprend également le tamis moléculaire (1).

20. Dispositif selon la revendication précédente comprenant un ou plusieurs fût aptes à contenir chacun au moins un déchet tritié et dans lequel la couverture entoure le fût ou la pluralité de fûts.


**Patentansprüche**

1. Verfahren zur Reduktion der Menge von tritiumhaltigem Wasserstoff ($T_2$ oder HT) oder von tritiumhaltigem Wasser (HTO oder $T_2O$), welches durch zumindest ein Gebinde erzeugt wird, welches zumindest einen tritiumhaltigen Abfall (5) aufweist, welcher aus der Nuklearindustrie stammt, wobei das Verfahren **dadurch gekennzeichnet ist, dass** es die folgenden Schritte aufweist:

    - In-Kontakt-Bringen des Gebindes mit einer Mischung (2), welche Magnesiumdioxid ($MnO_2$) aufweist und mit einer Verbindung , welche Silber aufweist;
    - In-Kontakt-Bringen des Gebindes mit zumindest einem Molekularsieb (1).

2. Verfahren nach Anspruch 1, in welchem das Silber sich in Form von Silberoxid in der Mischung (2) befindet, in welcher die Massenkonzentration des Magnesiumdioxids in der Mischung (2) zwischen 80% und 99% liegt und bei welchem die Massenkonzentration des Silberoxids in der Mischung (2) zwischen 20% und 1 % liegt.

3. Verfahren nach dem vorhergehenden Anspruch, in welchem die Massenkonzentration der Mischung (2) für das Magnesiumdioxid und für das Silberoxid jeweils von der Größenordnung von 90% und 10% sind.

4. Verfahren nach einem der vorhergehenden Ansprüche, bei welchem die Mischung (2) eine Platinverbindung aufweist, deren Massenkonzentration in der Mischung (2) zwischen 0,1% und 1% liegt.

5. Verfahren nach dem vorhergehenden Anspruch, bei welchem die Platinverbindung eine Platinschwarzverbindung 10% Pt ist.

6. Verfahren nach einem der vorhergehenden Ansprüche, in welchem das Molekularsieb (1) ein Zeolit vom Typ 4A oder 5A ist.

7. Verfahren nach einem der vorhergehenden Ansprüche, aufweisend, vorhergehend zu den Schritten des In-Kontakt-Bringens des Gebindes mit der Mischung (2) und des In-Kontakt-Bringens des Gebindes mit einem Molekularsieb (1), ein Schritt der Ablagerung der Mischung (2) auf dem Molekularsieb (1).

8. Verfahren nach dem vorhergehenden Anspruch, bei welchem der Schritt der Ablagerung der Mischung (2) auf dem Molekularsieb (1) von einem Schritt der mechanischen Befestigung der Mischung (2) auf dem Molekularsieb (1) begleitet wird oder durch einen Schritt der chemischen Befestigung der Mischung (2) auf dem Molekularsieb (1) mithilfe eines Additivs.

9. Verfahren nach dem vorhergehenden Anspruch, bei welchem das Gebinde sich in Form eines Fasses (10) darbietet, welches einen Boden (12) aufweist und welches geeignet ist, zumindest einen tritiumhaltigen Abfall (5) zu enthalten, wobei das Verfahren einen Schritt des Platzierens, im Inneren des Fasses (10), des molekularen Siebs (1) aufweist, auf welchem die Mischung (2) befestigt ist, oder bei welchem das Gebinde sich in Form eines Fasses (10) darstellt, das einen Boden (12) aufweist und zumindest einen tritiumhaltigen Abfall (5) umschließt, wobei das Verfahren einen Schritt des Platzierens des Molekularsiebs (1) in dem Boden (12) des Fasses (10) aufweist und einen Schritt der Anordnung der Mischung (2) in den Abfällen (5) oder auf den Abfällen (5).

**10.** Verfahren nach einem der vorhergehenden Ansprüche, bei welchem die Mischung (2) zumindest teilweise auf einem weichen Träger angeordnet ist, um eine Abdeckung zu bilden, wobei das Verfahren außerdem ein Schritt des Erhöhens eines Teils zumindest des Gebindes durch die Abdeckung aufweist, wobei der weiche Träger, vorzugsweise ein metallisches Geflecht ist.

**11.** Verfahren nach einem der vorhergehenden Ansprüche, aufweisend vor dem Schritt des In-Kontakt-Bringens des Gebindes mit eine Mischung (2) des Magnesiumdioxids ($MnO_2$), welches mit einer Verbindung kombiniert ist, welche Silber enthält, einen Schritt des Vorbereitens der Mischung (2) während welchem das Magnesiumdioxid ($MnO_2$) mit der Verbindung, welche Silber (Ag) enthält, gemischt wird.

**12.** Verfahren nach dem vorhergehenden Anspruch, bei welchem während des Schritts des Vorbereitens der Mischung (2) das Silber in Form von Silberoxid (AgO oder $Ag_2O$) mit dem Magnesiumdioxid ($MnO_2$) aufgebracht wird.

**13.** Verfahren nach dem vorhergehenden Anspruch, bei welchem der Schritt des Vorbereitens der Mischung (2) einen Schritt des Mischens (2) eines Magnesiumdioxidpuders mit einem Silberoxid (AgO, $Ag_2O$) aufweist und wobei das Verfahren vorzugsweise während des Schritts des Vorbereitens der Mischung und nach dem Schritt des Mischens des Magnesiumdioxidpulvers mit dem Silberoxidpulver einen Schritt des Hinzufügens von Wasser zu den gemischten Pudern aufweist.

**14.** Verfahren nach Anspruch 11, bei welchem der Schritt des Vorbereitens der Mischung (2) eine der folgenden Schritte aufweist: Einen Schritt des Verteilens einer Salzlösung, welche Silberionen ($Ag^+$) aufweist, auf das Magnesiumdioxid in festem Zustand; oder einen Schritt des Eintauchens des Magnesiumdioxids in festem Zustand in eine Lösung, welche ein Salz aufweist, welches Silber aufweist; oder einen Schritt des Ablagerns von Silber auf dem Magnesiumdioxid durch Abscheidung einer Lösung, welche Silber aufweist.

**15.** Vorrichtung zum Reduzieren der Menge an tritiumhaltigen Wasserstoff ($T_2$ oder HT), welcher zumindest von einem Gebinde, welches zumindest einen tritiumhaltigen Abfall (5) aufweist, erzeugt wird, wobei die Vorrichtung zumindest ein molekulares Sieb (1) aufweist, **dadurch gekennzeichnet, dass** die Vorrichtung auch eine Mischung (2) aufweist, welche Magnesiumdioxid ($MnO_2$) in Verbindung mit einer Verbindung, die Silber aufweist, aufweist.

**16.** Vorrichtung nah dem vorhergehenden Anspruch, wobei die Mischung (2) auf dem molekularen Sieb (1) befestigt ist.

**17.** Vorrichtung nach Anspruch 15, welche zumindest ein Fass (10) aufweist, geeignet, um zumindest einen tritiumhaltigen Abfall (5) aufzunehmen, genauso wie das molekulare Sieb (1) und die Mischung (2).

**18.** Vorrichtung nach Anspruch 15, bei welcher die Mischung (2) zumindest teilweise das molekulare Sieb (1) bedeckt, wobei das molekulare Sieb (1) und die Mischung (2) eine einstückige Gesamtheit bilden.

**19.** Vorrichtung nach Anspruch 15, welche eine Abdeckung aufweist, welche von einem weichen Träger gebildet wird, wobei der weiche Träger zumindest teilweise mit einer Schicht bedeckt ist, welche von der Mischung, die Magnesiumdioxid ($MnO_2$) aufweist, in Verbindung mit einer Verbindung, die Silber aufweist, gebildet wird und bei welchem vorzugsweise, die Abdeckung auch das molekulare Sieb (1) aufweist.

**20.** Vorrichtung nach dem vorhergehenden Anspruch, welche ein oder mehrere Fässer aufweist, welche geeignet sind, zumindest einen tritiumhaltigen Abfall aufzunehmen und bei welcher die Abdeckung das Fass oder die Mehrzahl an Fässern umgibt.

**Claims**

**1.** A method for reducing the amount of tritiated hydrogen ($T_2$ or HT) and/or tritiated water (HTO or $T_2O$) generated by at least one package including at least one piece of tritiated waste (5) from the nuclear industry, the method being **characterized by** including the following steps:

- placing the package in contact with a mixture (2) including manganese dioxide ($MnO_2$) combined with a

component comprising silver;
- placing the package in contact with at least one molecular sieve (1).

2. A method according to claim 1, wherein the silver appears as silver oxide in the mixture (2), in which the mass concentration of manganese dioxide in the mixture (2) is ranging from 80% to 99% and in which the mass concentration of silver oxide in the mixture (2) is ranging from 20% to 1%.

3. A method according to the previous claim, wherein the mass concentrations of manganese dioxide and silver oxide in the mixture (2) are about 90% and 10%, respectively.

4. A method according to any of the previous claim, wherein the mixture (2) includes a platinum compound in which the mass concentration in the mixture (2) is ranging from 0.1 % to 1%.

5. A method according to the previous claim, wherein the platinum compound is made of platinum black 10% Pt.

6. A method according to any of the previous claim, wherein the molecular sieve (1) is a 4A-type or 5A-type zeolite.

7. A method according to any of the previous claim, including, prior to the steps of placing the package in contact with the mixture (2) and of placing the package in contact with a molecular sieve (1), a step of depositing the mixture (2) on the molecular sieve (1).

8. A method according to the previous claim, wherein the step of depositing the mixture (2) on the molecular sieve (1) is followed by a step of mechanically fixing the mixture (2) onto the molecular sieve (1) or by a step of chemically fixing the mixture (2) onto the molecular sieve (1) by means of an additive.

9. A method according to the previous, wherein the package appears as a drum (10) having a bottom (12) and containing at least one piece of tritiated waste (5), the method including a step of placing inside the drum (10) the molecular sieve (1) on which the mixture (2) is fixed or wherein the package appears as a drum (10) having a bottom (12) and containing at least one piece of tritiated waste (5), the method including a step of placing the molecular sieve (1) in the bottom (12) of the drum (10) and a step of depositing the mixture (2) within the waste (5) or onto the waste (5).

10. A method according to any of the previous claims, wherein the mixture (2) is arranged at least partially on a flexible substrate in order to form a covering, the method also including a step of surrounding at least one portion of the package with the covering, the flexible substrate being preferentially a wire mesh.

11. A method according to any of the previous claims, including, prior to the step of placing the package in contact with a mixture (2) of manganese dioxide ($MnO_2$) combined with a compound comprising silver, a step of preparing the mixture (2) during which the manganese dioxide ($MnO_2$) is combined with the compound comprising silver (Ag).

12. A method according to the previous claim, wherein, during the step of preparing the mixture (2), the silver is added as a silver oxide (AgO or $Ag_2O$) to the manganese dioxide ($MnO_2$).

13. A method according to previous claim, wherein the step of preparing the mixture (2) includes a step of mixing the manganese dioxide powder with the silver oxide powder (AgO or $Ag_2O$) and, preferably, the method comprising during the step of preparing the mixture and after the step of mixing the manganese dioxide powder with the silver oxide powder, a step of adding water to said mixed powders.

14. A method according to claim 11, wherein the step of preparing the mixture (2) includes comprises one of the following steps: a step of spreading a saline solution including silver ions ($Ag^+$) on the manganese dioxide in solid state, or a step of submerging the manganese dioxide in solid state in a solution including a salt comprising silver or a step of depositing silver on the manganese dioxide by a precipitation reaction of a solution including silver.

15. A device for reducing the amount of tritiated hydrogen ($T_2$ or HT) generated by at least one package including at least one piece of tritiated waste (5), the device including at least one molecular sieve (1), **characterized in that** the device also comprises a mixture (2) including manganese dioxide ($MnO_2$) combined with a compound comprising silver.

16. A device according to the previous claim, wherein said mixture (2) is fixed to the molecular sieve (1).

17. A device according to claim 15 including at least one drum (10) containing at least one piece of tritiated waste (5) as well as the molecular sieve (10) and the mixture (2).

18. A device according to claim 15, wherein the mixture (2) covers at least partially the molecular sieve (1), the molecular sieve (1) and the mixture (2) forming an unitary assembly.

19. A device according to claim 15, including a covering made of a flexible substrate, the flexible substrate being covered, at least partially, by a layer made of the mixture including manganese dioxide ($MnO_2$) combined with a compound containing silver and wherein, preferably, the covering also includes the molecular sieve (1).

20. A device according to previous claim, including one or more drums, each of which containing at least one piece of tritiated waste and wherein the covering surrounds the drum or the plurality of drums.

Fig. 1

Fig. 2

Fig. 3

10

13

11

3

2

1

12

Fig. 4

**EP 2 605 249 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   US 5464988 A